# EUROPÄISCHE PATENTSCHRIFT

(11) **EP 1 961 862 B1**
(45) Veröffentlichungstag und Bekanntmachung des Hinweises auf die Patenterteilung: **16.03.2011**
(21) Anmeldenummer: 08010123.1
(22) Anmeldetag: 30.06.2004
(51) Int. Cl.: D21H 17/69, D21H 23/76, C01B 33/146, D21H 17/68, D21H 17/09, D21H 21/10

(54) **Papierherstellung mit modifizierten Kieselsolen als Mikropartikel**
Paper production with modified solids as microparticles
Fabrication de papier à l'aide de sols en gravier modifiés en tant que microparticules

(30) Priorität: 04.07.2003 DE 10330395; 24.04.2004 DE 102004020112
(43) Veröffentlichungstag der Anmeldung: 27.08.2008
(62) Teilanmeldung aus: 04740462.9
(73) Patentinhaber: Kemira Oyj, 00180 Helsinki (FI); Akzo Nobel Chemicals International B.V., 3811 MH Amersfoort (NL)
(72) Erfinder: Thomas Hübbe, 51069 Köln (DE); Johan Kijlstra, 51519 Odenthal (DE); Karlheinrich Meisel, 55494 Dichtelbach (DE); Arno Nennemann, 51469 Bergisch Gladbach (DE); Lothar Puppe, 51399 Burscheid (DE); Gerd-Friedrich Renner, 51519 Kürten (DE); Bernd Thiele, 64625 Bensheim (DE)
(74) Vertreter: Kreller-Schober, Maria

(56) Entgegenhaltungen:
- EP-A- 1 142 640
- WO-A-00/69976
- WO-A-86/00100
- DE-A- 2 426 306
- DE-A- 10 050 343
- US-A- 5 603 805
- US-A- 5 760 126
- US-A- 5 888 290

## Beschreibung

Die Erfindung betrifft modifizierte Kieselsole für die Papierherstellung, modifizierte Kieselsole an sich sowie Verfahren zu ihrer Herstellung.

Bei der Herstellung von Papier werden zur Verbesserung von Retention, Entwässerungsverhalten und Formation (hierunter wird die "Gleichmäßigkeit" bzw. "Wolkigkeit" des Papiers verstanden) Mikropartikelsysteme eingesetzt. Diese können sowohl organischer als auch anorganischer Natur sein. Sie werden bevorzugt in Kombination mit kationischen Polymeren eingesetzt.

Als anorganische Mikropartikel werden bevorzugt Bentonite sowie Kieselsole eingesetzt (vgl. EP-A-0 635 602).

Im Gegensatz zu den organischen Mikropartikelsystemen, die ihre volle Wirkung auch in saurem Medium entfalten, haben anorganische Mikropartikelsysteme auf Basis von Bentonit oder Kieselsol den Nachteil, dass sie ihre optimale Wirkung nur in neutralem oder alkalischem Medium erreichen.

Kieselsole haben darüber hinaus den Nachteil, dass sie bei längerem Lagern zum Vergelen neigen. Dies macht wiederum weitere Zusätze wie Dispergiermittel oder Oberflächendotierungen mit Aluminiumionen erforderlich (EP-A-0 185 068, US-A-5 603 805, K.K. Iler, The Chemistry of Silica, Wiley & Sons, New York, 1979, Seiten 407-410).

Als weiteren Nachteil besitzen die bekannten Kieselsole für den Zweck des Mikropartikelsystems eine verbesserungsbedürftige Kosten-Wirkungsrelation. US-A-5 888 290 offenbart eine fluorchemische Zusammensetzung, die Substraten, wie Teppichen oder Textilien, öl- und wasserabweisende Wirkung verleiht, und ein Sol mit anorganischen Mikropartikeln, zum Beispiel Kieselsolen, enthält. US-A-5 760 126 betrifft eine wasserbasierte Beschichtungszusammensetzung, die ebenfalls ein Sol mit anorganischen Mikropartikeln, beispielsweise Kieselsol, enthält. In der WO-A-0 069 976 werden Kieselsole offenbart, deren Oberfläche durch Pfropfen, Adsorption eines organischen Moleküls oder Dotieren mit einem Dotiermittel behandelt wird. Keine dieser Druckschriften offenbart Sulfonsäuregruppen-haltige Kieselsole.

Aufgabe der vorliegenden Erfindung war es, Kieselsole als Mikropartikel für die Papierherstellung bereitzustellen, die die beschriebenen Nachteile des Standes der Technik nicht aufweisen.

Überraschenderweise wurde nun gefunden, dass Sulfonsäuregruppen-haltige Kieselsole diese Aufgabe lösen.

Die Erfindung betrifft daher die Sulfonsäuregruppen-haltigen Kieselsole gemäß Patentanspruch 1. Hierin beschrieben wird auch die Verwendung von Sulfonsäuregruppen- und/oder Mercaptogruppen-haltigen Kieselsolen als Mikropartikel bei der Papierherstellung, insbesondere bei der Papierretention.

Im Rahmen dieser Anmeldung werden unter "Säuregruppe" auch deren Salze, insbesondere Alkali-, wie Natrium- und Kalium-, Erdalkali-, wie Magnesium- und Calcium- oder Ammoniumsalze verstanden.

Bevorzugt sind solche Kieselsole, die eine an ein Siliciumatom gebundene Gruppe der Formel (I) aufweisen,

-B-(SO₃M)ₚ- (I),

wobei hierin auch Kieselsole beschrieben sind, die eine an ein Siliciumatom gebundene Gruppe der Formel (II) aufweisen, -B-(SH)ₚ- (II),

worin
- B: ein (p+1)-valentes Brückenglied bedeutet,
- p: eine Zahl von 1 bis 3 ist und
- M: für Wasserstoff, Alkali insbesondere Na, Li, K, Erdalkali insbesondere Mg, Ca oder Ammonium steht.

Besonders bevorzugt ist B bivalent, d.h. p steht für 1. Vorzugsweise steht B für eine gegebenenfalls durch ein oder mehrere Sauerstoffatome unterbrochene lineare oder verzweigte Alkylengruppe mit 1 bis 15 C-Atomen, eine Cycloalkylengruppe mit 5 bis 8 C-Atomen oder eine Einheit der Formeln

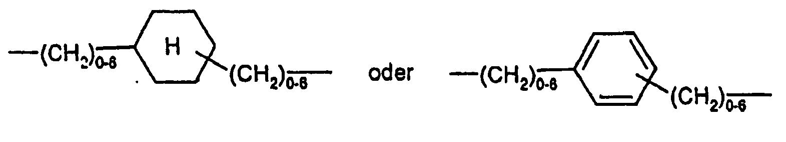

Ganz besonders bevorzugt steht B für -(CH₂)ₙ- mit n = 1 bis 6, insbesondere 3.

Bevorzugt werden Kieselsole mit Sulfonsäuregruppen, insbesondere solche der Formel (I), besonders bevorzugt solche der Formel (Ia)

-(CH₂)₃-SO₃M (Ia)

verwendet, wobei M die oben angegebene Bedeutung hat.

Bevorzugt beträgt der Schwefelgehalt bezogen auf SiO₂ des Kieselsols 0,1 bis 30 Mol-%, vorzugsweise 0,1 bis 8 Mol-%, insbesondere 1 bis 5 Mol-%. Der Schwefelgehalt kann beispielsweise durch Elementaranalyse bestimmt werden.

Bevorzugt weisen die verwendeten Kieselsole nach der TEM-Methode (Transmissions-Elektronenmikroskopie) eine mittlere Teilchengröße von kleiner 400 nm, vorzugsweise von 2 - 200 nm, insbesondere von 2 - 45 nm, besonders bevorzugt von 2 - 20 nm auf.

Bevorzugt weisen die erfindungsgemäßen Kieselsole eine spezifische Oberfläche von 300 bis 1200 m²/g auf, vorzugsweise 400 bis 1200 m²/g, insbesondere 450 bis 1200 m²/g, gemessen durch Sears-Titration mit Natriumhydroxid.

Die spezifische Oberfläche wird durch Titration des Kieselsols mit NaOH nach dem Searsverfahren bestimmt (G.W. Sears, Analytical Chem. 28, 12, S. 1981ff, 1956). Die Bestimmung der spezifischen Oberfläche dieses Eichsols erfolgt über die BET-Methode (S. Brunauer, P.H. Emmet und E. Teller, J. Amer. Soc. 60, 309-319, 1938).

Ebenfalls bevorzugt sind die erfindungsgemäßen Kieselsole, die einen S-Wert von 2 bis 80, vorzugsweise 2,5 bis 70, insbesondere von 20 bis 70 besitzen.

Die Bestimmung der S-Werte erfolgt nach Iler, R. K.; Dalton, R. L. Journal of Physical Chemistry 1956, 60 955.

Die verwendeten Kieselsole liegen bevorzugt als wässrige Dispersion vor, vorzugsweise mit einem Gehalt von 5 bis 20 Gew.% an Kieselsol, bezogen auf die Dispersion, vorzugsweise 7,5 bis 15 Gew.-%, insbesondere 10 bis 15 Gew.-%. Diese Dispersionen können weiterhin Salze der Alkali- oder Erdalkalielemente bzw. Verbindungen des Aluminiums oder Bors enthalten. Weiterhin können anionische oder nichtionische Dispergiermittel enthalten sein.

Die Dispersionen enthalten jedoch vorzugsweise einen Al-Gehalt von kleiner 0,1 Gew.-%. Sollte der Salzgehalt zu hoch sein, kann dieser beispielsweise mittels Membran-technischer Verfahren verringert werden. Ebenfalls können die Kieselsolgehalte in der Dispersion mittels Membranen eingestellt werden, beispielsweise durch Aufkonzentration weniger konzentrierter Dispersionen.

Bevorzugt wird das erfindungsgemäße Kieselsol in Kombination mit kationischen Polymeren, insbesondere solchen aus der Gruppe der Polyethylenimine, Polyamine, Polyamidamide, Polyacrylamide, Polyvinylamin, Stärke oder Guarkernmehl oder andere Polysaccharide, die ggf. weiter modifiziert sein können und die einzeln oder in beliebiger Mischung miteinander eingesetzt werden können, eingesetzt.

Als bevorzugte Polyethylenimine sind lineare oder verzweigte Verbindungen mit einem Molekulargewicht von größer 0,5 Mio g/mol, insbesondere von 500 000 bis 2 Mio g/mol, vorzugsweise von 700 000 bis 1,5 Mio g/mol zu nennen.

Als bevorzugte Polyamidamine sind lineare oder verzweigte Verbindungen mit einem Molekulargewicht von größer 0,5 Mio g/mol, insbesondere von 500 000 bis 2 Mio g/mol, vorzugsweise von 700 000 bis 1,5 Mio g/mol zu nennen.

Bevorzugte Polyacrylamide können sowohl linear als auch verzweigt sein. Ihr Molekulargewicht kann von 2 Mio bis 30 Mio Dalton liegen, bevorzugt von 2,5 Mio bis 15 Mio Dalton.

Als bevorzugte Stärke sind kationische Stärkederivate auf der Basis von Kartoffeln, Tapioca, Mais, Weizen oder Reis zu nennen. Sie haben bevorzugt einen Substitutionsgrad von 0,005 bis 0,15, besonders bevorzugt einen Substitutionsgrad von 0,02 bis 0,08. Die Stärken können ggf. auch teilweise abgebaut sein.

Die Erfindung betrifft Sulfonsäuregruppen-haltige Kieselsole mit einer mittleren Teilchengröße, gemessen nach TEM, von 2 - 45 nm, vorzugsweise von 2-20 nm. Ansonsten gelten die oben angegebenen Vorzugsbereiche.

Die Erfindung betrifft weiterhin die Sulfonsäuregruppen-haltigen Kieselsole, die einen Schwefelgehalt, bezogen auf SiO₂ des Kieselsols von 0,1 bis 30 Mol-%, vorzugswseise 0,1 bis 8 Mol-%, insbesondere 1 bis 5 Mol-%, aufweisen.

Ansonsten gelten die oben angegebenen Vorzugsbereiche. Die erfindungsgemäßen Kieselsole mit einem derartigen Schwefelgehalt sind insbesondere dann bevorzugt, wenn sie einen Rest der Formel -(CH₂)₃-SO₃M besitzen, worin M die obige Bedeutung hat und insbesondere für H oder Na steht.

Hierin beschrieben sind auch solche Kieselsole, die Mercapto-gruppen besitzen, insbesondere solche der Formel (II), die die Mercaptogruppen an einem Si-Atom gebunden besitzen und die einen Sulfonsäuregruppengehalt von kleiner 1 mol-%, bezogen auf SiO₂ des Kieselsols besitzen.

Die Erfindung betrifft weiterhin ein Verfahren zur Herstellung der erfindungsgemäßen Kieselsole, das dadurch gekennzeichnet ist, dass man ein SO₃M-gruppenfreies Kieselsol, worin M die obige Bedeutung hat,
b) mit einer SO₃M-gruppenhaltigen Verbindung umsetzt oder
   b1) mit einer eine funktionelle Gruppe enthaltenden Verbindung umsetzt und die funktionelle Gruppe selbst in eine SO₃M-Gruppe überführt, insbesondere mit Mercaptoverbindungen umsetzt und die erhaltene Mercaptoverbindung oxidiert, oder
   b2) mit einer eine funktionelle Gruppe enthaltenden Verbindung umsetzt und das so derivatisierte Kieselsol weiter mit einer SO₃M-gruppenhaltigen Verbindung umsetzt,
   wobei die Umsetzung in einem wässrigen Medium mit einem Wassergehalt von wenigstens 75 Gew.-% in wenigstens einer der Stufen b), b1) oder b2), bezogen auf das jeweilige Reaktionsgemisch, durchgeführt wurde.

Besonders bevorzugt sind die Varianten b) und b1).

Als SO₃M-gruppenhaltige Verbindung ist bevorzugt die Verbindung der Formel III zu nennen

(CH₃)_{q}Si(OR)ₘ(OH)ₚ-(CH₂)ₙ-SO₃M (III),

worin
m und p jeweils eine Zahl von 0 bis 3 bedeuten,
- q: = 0 der 1 ist und
und die Summe von q und m und p = 3 ist,
- n: = 1 bis 15, vorzugsweise 1 bis 6, insbesondere 3,
- M: die obige Bedeutung hat und
- R: für C₁-C₃-Alkyl, insbesondere für Methyl oder Ethyl steht.
Besonders bevorzugt sind Verbindungen der Formel (III), die der Formel (IIIa) entsprechen

(CH₃)_{q} Si(OH)ₚ-(CH₂)₃-SO₃M (IIIa),

worin
M, p und q die oben genannte Bedeutung haben, insbesondere steht p für 3 und q für 0.

Als eine wenigstens eine funktionelle Gruppe enthaltende Verbindung wird vorzugsweise eine Mercapto (SH)-Verbindung eingesetzt, die nach der Umsetzung zu einer SO₃M-Verbindung oxidiert wird.

Als bevorzugte Mercapto-Verbindungen sind solche der Formel (IV) zu nennen

(CH₃)_{q}Si(OR)ₘ(OH)ₚ-(CH₂)ₙ-SH (IV),

worin
- m, p und q: die oben angegebenen Bedeutungen haben,
- n: 1 bis 15, insbesondere 1 bis 6, vorzugsweise 3 bedeutet und
- R: die oben genannte Bedeutung hat, vorzugsweise für Methyl oder Ethyl steht.

Eine bevorzugte Verbindung der Formel IV ist die der Formel (IVa)

(CH₃)_{q} Si(OCH₃)ₘ(CH₂)₃-SH (IVa),

worin die Summe aus q und m = 3 ist,
sowie eine Verbindung der Formel (IVb)

(CH₃)_{q}Si(OH)ₚ(CH₂)₃-SH (IVb),

worin die Summe aus q und p = 3 ist und
worin m, p und q jeweils die oben genannte Bedeutung haben.

Die Umsetzung von Kieselsol mit funktionelle Gruppen tragenden Verbindungen, insbesondere mit Mercapto-Verbindungen, vorzugsweise solchen der Formeln IV und IVa, ist vorzugsweise dadurch gekennzeichnet, dass man die beiden Komponenten bei einer Temperatur von 0°C bis 150°C, vorzugsweise 0°C bis 100°C reagieren lässt. Dabei können mögliche Kondensationsprodukte wie Wasser und Alkohole vorzugsweise kontinuierlich der Reaktionsmischung entnommen werden, beispielsweise durch Destillation. Gegebenenfalls kann auch in einem Lösungsmittel gearbeitet werden.

Insbesondere die Mercapto-Gruppen des so erhaltenen Kieselsols können anschließend mit einem Oxidationsmittel, vorzugsweise H₂O₂, in bekannter Weise zu Sulfonsäuregruppen oxidiert werden.

Die Oxidation kann alternativ auch mit Ammoniumperoxodisulfat, Natriumperoxodisulfat, Kaliumperoxodisulfat, Eisennitrat, tert-Butylhydroperoxid, Ozon (Carosche Säure), Kaliumiodat, Kaliumperiodat, Periodsäure durchgeführt werden.

Weiterhin sind Verbindungen zu nennen, die funktionelle Gruppen tragen, die als Anker dienen und mit Verbindungen umgesetzt werden, die ihrerseits eine oder mehrere SO₃H-Gruppen tragen. Solche Verbindungen haben beispielsweise die allgemeine Formel (V)

(CH₃)_{q} Si(OH)ₘ(CH₂)₃-F, (V)

wobei
F eine funktionelle Gruppe ist, die weiter umgesetzt werden kann, wie z.B. eine SH-Gruppe, eine primäre oder sekundäre Aminogruppe und q und m die oben genannte Bedeutung haben.

Bevorzugte funktionelle Gruppen-tragende Verbindungen sind:

Si(OCH₃)₃-(CH₂)₃-SH (VI),

CH₃Si(OCH₃)₂(CH₂)₃-SH (VII),

Si(OH)₃-(CH₂)₃-SH (VIII),

CH₃Si(OH)₂(CH₂)₃-SH (IX),

Si(OC₂H₅)₃-(CH₂)₃-SH (X),

CH₃Si(OC₂H₅)₂-(CH₂)₃-SH (XI),

Si(OCH₃)₃-(CH₂)₃-NH₂ (XII),

CH₃Si(OCH₃)₂ (CH₂)₃-NH₂ (XIII),

Si(OH)₃-(CH₂)₃- NH₂ (XIV),

CH₃Si(OH)₂(CH₂)₃-NH₂ (XV),

Si(OC₂H₅)₃-(CH₂)₃-NH₂ (XVI),

CH₃Si(OC₂H₅)₂-(CH₂)₃-NH₂ (XVII),

die ihrerseits mit bifunktionellen Verbindungen der allgemeinen Formel

ClO₂S-B₁-(SO₂C1)ₙ,

worin n = 1 oder 2 bedeutet
und B₁ ein aromatisches Brückenglied mit 6 oder 10 Kohlenstoffatomen bedeutet,
umgesetzt werden können.

Besonders bevorzugt sind dabei Benzoldisulfonsäurechloride, Toluoldisulfonsäurechloride oder Naphthalindisulfonsäurechloride bzw. Naphthalintrisulfonsäurechloride, die ihrerseits wieder substituiert sein können, so dass beispielsweise ein Mikropartikelsystem der allgemeinen Formel

SiO₂)- (CH₂)₃-NH-SO₂-C₁₀H₆-SO₃M (XVIII)

resultiert.

Ebenfalls bevorzugt ist es, Komponenten der allgemeinen Formeln VI bis XVII mit bi- oder trifunktionellen Reagenzien umzusetzen, die ihrerseits keine weitere saure Gruppe tragen, aber zur Brückenbildung befähigt sind. Solche Verbindungen sind beispielsweise Cyanurchlorid oder Diisocyanate, insbesondere Hexamethylendiisocyanat, p-Phenylendiisocyanat oder Toluylendiisocyanat. Sie können ihrerseits wieder mit Verbindungen umgesetzt werden, die durch Sulfonsäuregruppen substituiert sind. Solche Verbindungen können sein:
Taurin oder aus der Farbstoffchemie bekannte durch Aminogruppen substituierte aromatische Sulfonsäuren, beispielsweise H-Säure (1-Amino-8-hydroxinaphthalin-3,6-disulfonsäure), I-Säure (2-Amino-5-hydroxi-naphthalin-7-sulfonsäure) oder γ-Säure (2-Amino-8-hydroxi-6-sulfonsäure).

Bevorzugt werden die Verbindungen III bis XVII in einer Menge von 0,1 bis 30 Mol-%, insbesondere 0,5 bis 5 Mol-% bezogen auf Si des Kieselsols eingesetzt.

Ebenfalls betrifft die Erfindung die durch Umsetzung von Kieselsol und einer Verbindung der Formel III oder IV und gegebenenfalls anschließender Oxidation erhältlichen Produkte.

Sulfongruppen-haltige Kieselsole sind bereits in anderer Form (z.B. andere Teilchengröße bzw. anderer Schwefelgehalt) für Katalysatorzwecke aus EP-A-1 142 640, EP-A-63 471, DE-A-2 426 306 sowie R-D. Badley, T. Ford. J. Org. Chem. 1989, 54, 5437-5443 bekannt.

Die Erfindung betrifft weiterhin Papier, das ein erfindungsgemäßes Kieselsol enthält. Hierin beschrieben ist auch ein Verfahren zur Herstellung von Papier, bei dem man einer wässrigen Cellulosesuspension das erfindungsgemäße Kieselsol und ein kationisches Polymer in beliebiger Reihenfolge zugibt, anschließend die Blattbildung, Entwässerung und Trocknung des Blattes vornimmt. Solche Verfahren sind beispielsweise in US-A-5 643 414 beschrieben.

Die erfindungsgemäßen Kieselsolen zeichnen sich durch eine deutlich verbesserte Lagerstabilität aus. Gleichzeitig zeigen sie eine deutlich verbesserte Wirksamkeit bei Entwässerungsgeschwindigkeit und Retention, insbesondere in Kombination mit kationischen Polymeren geringer Ladungsdichte.

### Beispiele

### Beispiel 1:

Eine konzentrierte wässrige Lösung von Wasserglas der Bruttozusammensetzung (Na₂O3,3SiO₂) wird mit Wasser auf einen SiO₂-Gehalt von 6 % verdünnt. Die wässrige Lösung wird mit einem sauren Ionenaustauscher auf pH 2,3 bis 2,5 gestellt. Die so erhaltene Lösung wird im Folgenden als "Frischsol" bezeichnet.

### Beispiel 2:

Die in Beispiel 1 hergestellte Frischsollösung wird in 0,5 Std. in eine verdünnte Wasserglaslösung eingetropft und in alkalischem Medium etwa eine halbe Stunde bei einer Temperatur von 72°C. und ansehließend eine halbe Stunde bei einer Temperatur von 76°C getempert. Der pH-Wert soll dabei zwischen 8 und 10 liegen. Anschließend wird im leichten Vakuum bis zu einem Feststoffgehalt von 10 % eingedampft.

### Beispiel 3:

Man verfährt wie in Beispiel 2, jedoch werden beim Eindosieren der Frischsollösung in das alkalische Medium gleichzeitig 1 Mol-% einer 10 %igen Lösung von Si(OR)₃-(CH₂)₃-SH mit R = CH₃ in Ethanol eindosiert. Dabei wird kontinierlich ein Gemisch aus Methanol und Ethanol abdestilliert. Nach dem Tempern der Lösung analog zu Beispiel 2 wird die Mercaptogruppe in bekannter Weise durch Zugabe von 35 %iger H₂O₂-Lösung zu SO₃H oxidiert. Anschließend wird bis zu einem Feststoffgehalt von 10 % eingedampft.

### Beispiel 4:

In analoger Weise kann auch Si(OR)₃-(CH₂)₃-SH mit R = C₂H₅ eingesetzt werden. Es entsteht ein identisches Produkt.

### Beispiel 5:

Man verfährt wie in Beispiel 2, jedoch werden beim Eindosieren der Frischsollösung in das alkalische Medium gleichzeitig 2,5 Mol-% einer 10 %igen Lösung von Si(OR)₃-(CH₂)₃-SH mit R = CH₃ in Ethanol eindosiert. Dabei wird kontinierlich ein Gemisch aus Methanol und Ethanol abdestilliert. Nach dem Tempern der Lösung analog zu Beispiel 2 wird die Mercaptogruppe in bekannter Weise durch Zugabe von 35 %iger H₂O₂-Lösung zu SO₃H oxidiert. Anschließend wird bis zu einem Feststoffgehalt von 10 % eingedampft.

### Beispiel 6:

In analoger Weise kann auch Si(OR)₃-(CH₂)₃-SH mit R = C₂H₅ eingesetzt werden. Es entsteht ein identisches Produkt.

### Beispiel 7:

Man verfährt wie in Beispiel 2, jedoch werden beim Eindosieren der Frischsollösung in das alkalische Medium gleichzeitig 5 Mol-% einer 10 %igen Lösung von Si(OR)₃-(CH₂)₃-SH mit R = CH₃ in Ethanol eindosiert. Dabei wird kontinierlich ein Gemisch aus Methanol und Ethanol abdestilliert. Nach dem Tempern der Lösung analog zu Beispiel 2 wird die Mercaptogruppe in bekannter Weise durch Zugabe von 35 %iger H₂O₂-Lösung zu SO₃H oxidiert. Anschließend wird bis zu einem Feststoffgehalt von 10 % eingedampft.

### Beispiel 8:

In analoger Weise kann auch Si(OR)₃-(CH₂)₃-SH mit R = C₂H₅ eingesetzt werden. Es entsteht ein identisches Produkt.

### Beispiel 9:

10 g einer ethanolischen Lösung enthaltend 50 Gew.-% eines Silans der Formel Si(OC₂H₅)₃-(CH₂)₃-SH werden unter heftigem Rühren bei Raumtemperatur in 100 ml Wasser eingetropft. Dabei wird der pH-Wert durch Titration mit NaOH oberhalb von pH 10 gehalten. Nach einstündigem Verrühren bei Raumtemperatur wird das Ethanol abdestilliert.

Man erhält 80 g einer wässrigen Lösung von Si(OH)₃-(CH₂)₃-SH, das ggf. bereits über Wasserstoffbrücken aggregiert sein kann.

### Beispiel 10:

100 g einer Lösung gemäß Beispiel 9 werden durch Eintropfen von Wasserstoffperoxid oxidiert. Man erhält eine Lösung eines Silans der Bruttoformel Si(OH)₃-(CH₂)₃-SO₃Na, das ggf. bereits über Wasserstoffbrücken aggregiert sein kann.

### Beispiel 11:

Man verfährt wie in Beispiel 3, jedoch wird anstelle des alkoxygruppenhaltigen Silans 1 Mol-% des hydrolysierten Silans aus Beispiel 9 zudosiert. Anschließend wird die Mercaptogruppe in bekannter Weise durch Zugabe von 35 %iger H₂O₂-Lösung zu SO₃H oxidiert. Es wird bis zu einem Feststoffgehalt von 10 % eingedampft.

### Beispiel 12:

Man verfährt wie in Beispiel 3, jedoch werden anstelle des alkoxygruppenhaltigen Silans 2,5 Mol-% des hydrolysierten Silans aus Beispiel 9 zudosiert. Anschließend wird die Mercaptogruppe in bekannter Weise durch Zugabe von 35 %iger H₂O₂-Lösung zu SO₃H oxidiert. Es wird bis zu einem Feststoffgehalt von 10 % eingedampft.

### Beispiel 13:

Man verfährt wie in Beispiel 3, jedoch werden anstelle des alkoxygruppenhaltigen Silans 5 Mol-% des hydrolysierten Silans aus Beispiel 9 zudosiert. Anschließend wird die Mercaptogruppe in bekannter Weise durch Zugabe von 3 %iger H₂O₂-Lösung zu SO₃H oxidiert. Es wird bis zu einem Feststoffgehalt von 10 % eingedampft.

### Beispiel 14:

Man verfährt wie in Beispiel 3, jedoch wird anstelle des alkoxygruppenhaltigen Silans 1 Mol-% des hydrolysierten Silans aus Beispiel 10 zudosiert. Die nachfolgende Oxidation aus Beispiel 3 entfällt. Es wird bis zu einem Feststoffgehalt von 10 % eingedampft.

### Beispiel 15:

Man verfährt wie in Beispiel 3, jedoch werden anstelle des alkoxygruppenhaltigen Silans 2,5 Mol-% des hydrolysierten Silans aus Beispiel 10 zudosiert. Die nachfolgende Oxidation aus Beispiel 3 entfällt. Es wird bis zu einem Feststoffgehalt von 10 % eingedampft.

### Beispiel 16:

Man verfährt wie in Beispiel 3, jedoch werden anstelle des alkoxygruppenhaltigen Silans 5 Mol-% des hydrolysierten Silans aus Beispiel 10 zudosiert. Die nachfolgende Oxidation aus Beispiel 3 entfällt. Es wird bis zu einem Feststoffgehalt von 10 % eingedampft.

### Beispiel 17:

Man legt 872,8 g Edelwasser vor und gibt

105,4 g NaOH 50% zu. Die Temperatur wird auf 40°C erhöht. Bei dieser Temperatur werden in 15 Minuten 11,1 g 3-Mercaptopropyl-1-trimethoxysilan 97%ig zugetropft.

Man verrührt 45 Minuten bei 40°C, und destilliert anschließend in 45 Minuten

5,3 g Methanol ab. Zur Oxidation der Mercaptogruppe werden anschließend in 45 Minuten 16 g Wasserstoffperoxid 35%ig zugegeben. Es wird nochmals 1 Stunde bei 40°C nachgerührt.

Ausbeute: 1000g einer alkalischen Lösung von Trihydroxysilylpropansulfonsäure.

### Beispiel 18:

Man legt 479,7 g Edelwasser vor und gibt 135,3 g NaOH 50% zu. Die Temperatur wird auf 40°C erhöht. Bei dieser Temperatur werden in 60 Minuten

133,2 g 3-Mercaptopropyl-1-trimethoxysilan 97%ig zugetropft.

Man verrührt 60 Minuten bei 40°C, und destilliert anschließend in 90 Minuten

63,2 g Methanol ab. Zur Oxidation der Mercaptogruppe werden anschließend in 60 Minuten 191,8 g Wasserstoffperoxid 35%ig zugegeben. Die Reaktion verläuft stark exotherm, die Temperatur steigt dabei auf 60°C an. Es wird nochmals 1 Stunde bei 60°C nachgerührt. Anschließend werden 1123,2g NaOH 50% zugegeben.

Ausbeute: 2000g einer alkalischen Lösung von Trihydroxysilylpropansulfonsäure

### Beispiel 19:

91,1 g einer alkalischen Lösung von Trihydroxisilylpropansulfonsäure aus Beispiel 17 werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 0,5% Silan bezogen auf SiO₂

### Beispiel 20:

15,2 g einer alkalischen Lösung von Trihydroxisilylpropansulfonsäure aus Beispiel 1 S
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikatiönsgrad von 0,5% Silan bezogen auf SiO₂

### Beispiel 21:

Man legt 901,3 Edelwasser vor und gibt

55,0 g NaOH 99% zu. Die Temperatur wird auf 40°C erhöht. Bei dieser Temperatur werden in 15 Minuten

22,2 g 3-Mercaptopropyl-1-trimethoxysilan 97%ig zugetropft.

Man verrührt ca. 60 Minuten bei 40°C bis eine klare Lösung entstanden ist und destilliert anschließend in 45 Minuten
10,5 g Methanol ab. Zur Oxidation der Mercaptogruppe werden anschließend in 45 Minuten
32 g Wasserstoffperoxid 33%ig zugegeben. Es wird nochmals 1 Stunde bei 40°C nachgerührt.
Ausbeute: 1000g einer alkalischen Lösung von Trihydroxysilylpropansulfonsäure.

### Beispiel 22:

91,1 g einer alkalischen Lösung von Trihydroxisilylpropansulfonsäure aus Beispiel 21

werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 1% Silan bezogen auf SiO₂

### Beispiel 23:

Man legt 811,4 g Edelwasser vor und gibt

62,0 g NaOH 99% zu. Die Temperatur wird auf 40°C erhöht. Bei dieser Temperatur werden in 15 Minuten
55,5 g 3-Mercaptopropyl-1-trimethoxysilan 97%ig zugetropft.

Man verrührt ca. 60 Minuten bei 40°C bis eine klare Lösung entstanden ist und destilliert anschließend in 45 Minuten
26,3g Methanol ab. Zur Oxidation der Mercaptogruppe werden anschließend in 45 Minuten
79,9 g Wasserstoffperoxid 35%ig zugegeben. Es wird nochmals 1 Stunde bei 40°C nachgerührt.
Ausbeute: 1000g einer alkalischen Lösung von Trihydroxysilylpropansulfonsäure.

### Beispiel 24:

89,2 g einer alkalischen Lösung von Trihydroxisilylpropansulfonsäure aus Beispiel 23
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 2,5% Silan bezogen auf SiO₂

### Beispiel 25:

Man legt 424,9 g Edelwasser vor und gibt 68,5 g NaOH 99% zu. Die Temperatur wird auf 40°C erhöht. Bei dieser Temperatur werden in 60 Minuten
222 g 3-Mercaptopropyl-1-trimethoxysilan 97%ig zugetropft.

Man verrührt ca. 60 Minuten bei 40°C, bis eine klare Lösung entstanden ist und destilliert anschließend in 90 Minuten das entstandene Methanol ab. Zur Oxidation der Mercaptogruppe werden anschließend in 60 Minuten
319,6 g Wasserstoffperoxid 35%ig zugegeben. Die Reaktion verläuft stark exotherm, die Temperatur steigt dabei auf 60°C an. Es wird nochmals 1 Stunde bei 60°C nachgerührt. Anschließend werden
85,6g NaOH 99% zugegeben. Dabei geht ein zunächst ausgefallener Niederschlag wieder in Lösung.

Ausbeute: 1000g einer alkalischen Lösung von Trihydroxysilylpropansulfonsäure.

### Beispiel 26:

49,5 g einer alkalischen Lösung von Trihydroxisilylpropansulfonsäure aus Beispiel 25
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 5% Silan bezogen auf SiO₂

### Beispiel 27:

99 g einer alkalischen Lösung von Trihydroxisilylpropansulfonsäure aus Beispiel 26
werden bei Raumtemperatur vorgelegt. In diese Lösung werden unter möglichst guter Durchmischung 1000 g einer 6% igen Frischsollösung aus Beispiel 1 eindosiert. Das entstehende Kieselsol wird bei einer Temperatur unter 60°C im Vakuum auf einen Feststoffgehalt von 15% eingedampft.

Man erhält eine Kieselsollösung mit einem Modifikationsgrad von 10% Silan bezogen auf SiO₂

### Beispiel 28:

Es wurde eine Apparatur eingesetzt, die aus drei hintereinander angeordneten und miteinander verbundenen Überlaufreaktoren aus Glas besteht. Der Inhalt der Überlaufreaktoren, gemessen bei Siedetemperatur, beträgt für Reaktionsgefäß 1: 783 ml für Reaktionsgefäß 2: 617 ml, für Reaktionsgefäß 3: 644 ml.

Der Inhalt jedes Reaktionsgefäßes wird mit einem Propellerrührer durchmischt. Die Beheizung des Reaktorinhaltes erfolgt indirekt mit Dampf. Zu diesem Zweck sind im Innern der Reaktionsgefäße dampfdurchströmte Heizschlangen angebracht. Die Brüden werden über einen Wasserkühler geführt, kondensiert und anschließend das Volumen des Kondensats gemessen..

In den ersten der drei Überlaufreaktoren wurde mit einer Zugabevorrichtung eine gemäß US-A-2 244 325 hergestellte wässrige Lösung von saurem Frischsol gegeben. Die Zugabevorrichtung war so gewählt, dass die Zugabe auch in einzelne, ausgewählte Reaktoren erfolgen konnte. Über eine Dosiervorrichtung, war ebenso die Zugabe der Silanlösung und gegebenenfalls einer Lösung einer weiteren Base möglich.

Um die Lagerstabilität, d.h. die Zeitdauer der Lagerfähigkeit des Frischsols zu erhöhen, wurde besagte Lösung auf Temperaturen von 4-10°C gekühlt.

Die Silanlösung wurde nicht gekühlt, sie wurde mit der Umgebungstemperatur eingesetzt.

In den drei Reaktionsgefäßen wurde ein stationärer Zustand mit einer mittleren Verweilzeit von 14 min im 1. Reaktionsgefäß, 16 min im 2. Reaktionsgefäß und 20 min im 3. Reaktionsgefäß eingestellt. Dazu wurden 3200 ml Frischsol, das analog zu Beispiel 1 hergestellt wurde, mit 5,6 Gew.-% SiO₂ pro Stunde in das erste Reaktionsgefäß und 260 ml einer 2,25 Gew.- %igen ethanolischen Lösung von Trimethoxysilylpropylmercaptan pro Stunde ebenfalls in das 1. Reaktionsgefäß zugegeben und 1160 ml Wasser/Methanol verdampft.

Während des stationären Zustands wurden im 1. Reaktionsgefäß 91°C, im 2. Reaktionsgefäß 100°C und im 3. Reaktionsgefäß ebenfalls 100°C eingestellt. Die SiO₂-Konzentration verändert sich von 5,6 Gew.-% im 1. Reaktionsgefäß auf 9,5 Gew.-% im 3. Reaktionsgefäß während des stationären Zustands.

Nach dem Abkühlen des Produkts wird ein Überschuss von 20 % einer 3 %ige Lösung von H₂O₂ zugegeben.

Man erhielt ein feinteiliges, teilstrukturiertes Kieselsol, das eine Dichte von 1,065 g/ml, einen pH-Wert von 9,7 eine BET-Oberfläche von 480 m²/g und einen SO₃H-Gehalt von 1 Mol-% aufwies.

### Beispiel 29:

In der in Beispiel 28 beschriebenen Apparatur wurde ein stationärer Zustand mit einer mittleren Verweilzeit von 14 min im 1. Reaktionsgefäß, 16 min im 2. Reaktionsgefäß und 20 min im 3. Reaktionsgefäß durch die Zugabe von 1600 ml Frischsol mit 5,6 Gew.-% SiO₂ pro Stunde in das erste Reaktionsgefäß und 128 ml einer 2,25 Gew.-%igen ethanolischen Lösung von Trimethoxysilylpropylmercaptan pro Stunde ebenfalls in das 1. Reaktionsgefäß und durch Verdampfen von 390 ml Wasser/Ethanol im 3. Reaktionsgefäß eingestellt.

Während des stationären Zustands wurden im 1. Reaktionsgefäß 87°C, im 2. Reaktionsgefäß 100°C und im 3. Reaktionsgefäß ebenfalls 100°C eingestellt. Die SiO₂-Konzentration veränderte sich von 5,6 Gew.-% im 1. Reaktionsgefäß auf 6,1 Gew.-% im 2. Reaktionsgefäß.

Nach 3 Stunden Laufzeit im stationären Zustand wurde im Ablauf ein Kieselsol mit 6,1.-% SiO₂, mit einem pH-Wert von 8,71 und einer BET-Oberfläche vom 698 m²/g erhalten.

Nach dem Abkühlen des Produkts wird ein Überschuss von 20% einer 3% ige Lösung von H₂O₂ zugegeben.

### Beispiel 30:

Die Wirksamkeit der Verbindungen aus den Beispielen 2, 3, 5, 7, 11, 12, 13, 14, 15, 16, 19, 20, 22, 24, 26 und 27 wurde in bekannter Weise durch eine Bestimmung der Entwässerungsgeschwindigkeiten in einem Mütek DFS 03 Gerät, Sieb 60 / 0,17 bestimmt.

Als Standard diente das nicht modifiziertes Kieselsol aus Beispiel 2. Seine Wirksamkeit wurde auf 100 % gesetzt.

### Durchführung der Entwässerungsprüfung

Um eine optimale Differenzierung sowie Vergleichbarkeit zwischen den einzelnen Prüfreihen zu erreichen, wird ein automatisiertes Dosier- und Rührprofil eingehalten. Zur Prüfung wird ein Gerät der Firma Mütek (DFS 03) (**D**ynamic **F**iltration **S**ystem) eingesetzt Mit diesem Gerät ist es u.a. möglich, Rührerprofile in Abhängigkeit von der Zeit vorzugeben und den vorgelegten Stoff mit bis zu 1500 U/min zu scheren.

Als Modellsystem für die Prüfungen wurde eine Mischung aus Lang- und Kurzfaser mit einem Füllstoffzusatz von 20 % eingesetzt (58,35 % gebleichter Kurzfaser und 25 % gebleichter Langfaser-Zellstoff, 16,65 % gefälltes Calciumcarbonat GCC). Die bevorzugte Stoffdichte beträgt 0,5%. Als Referenzsystem wurde ein Polyacrylamid mit einer Kationizität von 20% und einer Brookfield-Viskosität von 3,91, gemessen in 0,1%iger 1molarer NaCl bei 60 Upm, mit den Mikropartikeln kombiniert. Zur Messung der Entwässerung (und der Retention) mit dem DFS - 03 wird das Polyacrylamid in einer Konzentration von 0,075 Gew.% und das Mikropartikel in einer Konzentration von 0,08 Gew.% jeweils bezogen auf den Stoff eingesetzt.

Zur Messung der Entwässerung mit dem DFS - 03 wird der Stoff unter Rühren (500 Upm) vorgelegt und eine Lösung des Polyacrylamids, die wie unten beschrieben hergestellt wurde, nach 10 s zudosiert. Nach 20 s wird für weitere 20 s bei 1200 Upm geschert und anschließend das Mikropartikel zugegeben. Nach einer Mischphase (200 Upm, 10 s) und einer weiteren Scherphase (500 Upm, 10 s) wird das Ventil unter dem Sieb (Maschenweite: 0,25 mm) geöffnet und die Entwässerungszeit gemessen. Die Entwässerungszeit der Nullprobe betrug ca. 60 s.

### Einwaagen:

In 99,6 g Wasser (Leitungswasser) werden 0,4 g des Polyacrylamids unter Rühren eingestreut, 15 Minuten gerührt (Magnetrührer 300 U/min), danach eine 1/2 Std. zur Quellung stehen lassen (Rührer abstellen).

Anschließend wird auf 400 g aufgefüllt (0,1 %ige Lsg.) und bei 500 U/min ca. 2,5 Std. gerührt bis alles vollständig gelöst ist.

Es ergaben sich die folgenden Wirksamkeitssteigerungen:

**Tabelle**

| Kieselsol aus Bsp. | Schwefelgehalt in Mol-% bezogen auf SiO₂ des Kieselsols | Steigerung der Entwässerungsgeschwindigkeit in % | Teilchen größen [nm] | S-Wert ** | Oberfläche * [m²/g] |
|---|---|---|---|---|---|
| 2 | 0 | 100 | 3-35 | 64 | 545 |
| 3 | 1 | 103 | 5-40 | 67 | 574 |
| 5 | 2,5 | 115 | 3-40 | 60 | 515 |
| 7 | 5 | 140 | 5-40 | 48 | 469 |
| 11 | 1 | 103 | 5-40 | 62 | 520 |
| 12 | 2,5 | 110 | 3-40 | 59 | 580 |
| 13 | 5 | 152 | 5-40 | 50 | 414 |
| 14 | 1 | 104 | 3-40 | 65 | 530 |
| 15 | 2,5 | 114 | 3-40 | 63 | 545 |
| 16 | 5 | 158 | 5-40 | 47 | 570 |
| 19 | 0,5 | 120 | 2-7 | 24,2 | 835 |
| 20 | 0,5 | 125 | 2-7 | 25,0 | 854 |
| 22 | 1 | 124 | 2-7 | 32 | 854 |
| 24 | 2,5 | 120 | 2-7 | 35,3 | 622 |
| 26 | 5 | 130 | 2-7 | 32,5 | 874 |
| 27 | 10 | 140 | 2-7 | 41 | 867 |

| | | | | | |
|---|---|---|---|---|---|
| * Dazu wird eine definierte Menge des Kieselsols (5 g Feststoff bezogen auf SiO₂) mit 350 ml NaCl-Lösung (0,286 kg/l) und 2 ml 1M HCl versetzt und mit deionisiertem Wasser auf 500 ml aufgefüllt. Das verdünnte Kieselsol hat einen pH-Wert von ca. 2 und eine NaCl-Konzentration von 4,9M/l. 150 ml des verdünnten Kieselsols werden bei definierter Temperatur mit einer 0,1M NaOH-Lösung titriert. Der Verbrauch *V* (ml) zwischen pH=4 und einem End-pH (*EP*) von ca. 9 wird ermittelt. Die spezifische Oberfläche *Oₛₚ* in m²/g erfolgt nach der Formel: *Oₛₚ*=*23 *V-25*. Der End-pH der Titration EP wird mit einem Eichsol bestimmt, bei dem die spezifische Oberfläche und damit der theoretische NaOH-Verbrauch *Vₜ* bekannt sind. Bei der Probenpräparation für die BET-Messung wird das Eichsol mit deionisiertem Wasser auf ca. 5% verdünnt und mit einem Ionenaustauscher auf einen pH < 5 gestellt. Danach wird der Ionenaustauscher abfiltriert und das Filtrat mit Natronlauge auf exakt pH = 5 eingestellt. Die Probe wird in drei Gefrierzyklen bei < - 10°C jeweils vollständig eingefroren und aufgetaut, um anschließend bei 110°C getrocknet zu werden. ** Die relative Viskosität wird mittels Ostwald-Viskosimeter bestimmt und daraus die relative Volumenfraktion der dispergierten Phase errechnet. Entsprechend Iler et. al. erhält man daraus unter Kenntnis der Feststoffkonzentration den S-Wert. Der S-Wert gibt den Anteil Silica in der dispergierten Phase in Gewichtsprozent an. Probenherstellung: Kurz vor der Messung der Viskosität werden die alkalischen Proben auf pH 2 gestellt. Hierzu werden die Proben über einen frischen Ionenaustauscher gegeben, um gleichzeitig Natriumionen durch Protonen auszutauschen. Anschließend wird filtriert und mit 1 N HCl auf pH 2 gestellt. Die Silica-Konzentration wird gravimetrisch ermittelt. | | | | | |

## Patentansprüche

1. Sulfonsäuregruppen-haltige Kieselsole mit einer mittleren Teilchengröße, gemessen nach TEM, von 2-45 nm, vorzugsweise von 2-20 nm.

2. Kieselsole gemäß Anspruch 1 mit einem Schwefelgehalt, bezogen auf SiO₂ des Kieselsols von 0,1 bis 30 Mol%, vorzugsweise 0,1 bis 8 Mol%, insbesondere 1 bis 5 Mol-%.

3. Kieselsole gemäß Anspruch 1 und/oder 2, **dadurch gekennzeichnet, dass** sie einen Rest der Formel -(CH₂)₃-SO₃M besitzen, worin M für H, Alkali, Erdalkali oder Ammonium steht.

4. Verfahren zur Herstellung von Kieselsolen gemäß Anspruch 1 und/oder 2, **dadurch gekennzeichnet, dass** man ein SO₃M-gruppenfreies Kieselsol, worin M die obige Bedeutung hat,
a) mit einer SO₃M-gruppenhaltigen Verbindung umsetzt oder
b) mit einer eine funktionelle Gruppe enthaltenden Verbindung umsetzt und die funktionelle Gruppe selbst in eine SO₃M-Gruppe überfährt, insbesondere mit Mercaptoverbindungen umsetzt und die erhaltene Mercaptoverbindung oxidiert, oder
c) mit einer eine funktionelle Gruppe enthaltenden Verbindung umsetzt und das so derivatisierte Kieselsol weiter mit einer SO₃M-gruppenhaltigen Verbindung umsetzt,
wobei die Umsetzung in einem wässrigen Medium mit einem Wassergehalt von mindestens 75 Gew.-% in wenigstens einer der Stufen a), b) oder c), bezogen auf die Masse des jeweiligen Reaktionsgemisches, durchgeführt wird.

5. Kieselsol gemäß einem der Ansprüche 1 bis 3, erhältlich nach einem Verfahren gemäß Anspruch 4.

6. Papier, **dadurch gekennzeichnet, dass** es ein Kieselsol gemäß Anspruch 1, 2, 3 oder 5 enthält.

## Claims

1. Silica sols containing sulfonic acid groups and having a mean particle size, measured according to TEM, of 2-45 nm, preferably of 2-20 nm.

2. The silica sols according to claim 1, having a sulfur content, based on SiO₂ of the silica sol, of from 0.1 to 30 mol%, preferably from 0.1 to 8 mol%, in particular from 1 to 5 mol%.

3. The silica sols according to claim 1 and/or 2, **characterized in that** they have a radical of the formula -(CH₂)₃-SO₃M, in which M is H, an alkali metal, an alkaline earth metal or ammonium.

4. A process for the preparation of silica sols according to claim 1 and/or 2, **characterized in that** a silica sol which is free of SO₃M groups and in which M has the above meaning,
a) is reacted with a compound containing SO₃M groups, or
b) is reacted with a compound containing a functional group and the functional group itself is converted into an SO₃M group, in particular is reacted with mercapto compounds and the mercapto compound obtained is oxidized, or
c) is reacted with a compound containing a functional group and the silica sol derivatized in this manner is further reacted with a compound containing SO₃M groups,
wherein the reaction is carried out in an aqueous medium having a water content of at least 75% by weight in at least one of the stages a), b) or c), based on the mass of the respective reaction mixture.

5. A silica sol according to any of claims 1 to 3, obtainable by a process according to claim 4.

6. A paper **characterized in that** it contains a silica sol according to claim 1, 2, 3 or 5.

## Revendications

1. Sols de silice contenant un groupe acide sulfonique, ayant une granulométrie moyenne, mesurée au MET, de 2-45 nm, de préférence de 2-20 nm.

2. Sols de silice selon la revendication 1, ayant une teneur en soufre, par rapport au SiO₂ du sol de silice, de 0,1 à 30 % en moles, de préférence de 0,1 à 8 % en moles, en particulier de 1 à 5 % en moles.

3. Sols de silice selon la revendication 1 et/ou 2, **caractérisés en ce qu'**ils comportent un radical de formule -(CH₂)₃-SO₃M, dans laquelle M représente H, un métal alcalin, un métal alcalino-terreux ou l'ammonium.

4. Procédé de préparation de sols de silice selon la revendication 1 et/ou 2, **caractérisé en ce qu'**on fait réagir un sol de silice sans groupe SO₃M, où M a les significations ci-dessus,
a) avec un composé contenant un groupe SO₃M, ou
b) on le fait réagir avec un composé contenant un groupe fonctionnel, et on convertit le groupe fonctionnel proprement dit en un groupe SO₃M, en particulier on le fait réagir avec des composés mercapto et on oxyde le composé mercapto obtenu, ou
c) on le fait réagir avec un composé contenant un groupe fonctionnel, et on soumet le sol de silice ainsi dérivatisé à une réaction plus poussée avec un composé contenant un groupe SO₃M,
la réaction étant mise en oeuvre dans un milieu aqueux ayant une teneur en eau d'au moins 75 % en poids dans au moins l'une des étapes a), b) ou c), par rapport à la masse du mélange réactionnel considéré.

5. Sols de silice selon l'une des revendications 1 à 3, pouvant être obtenus par un procédé selon la revendication 4.

6. Papier, **caractérisé en ce qu'**il contient un sol de silice selon la revendication 1, 2, 3 ou 5.
